# FASCICULE DE BREVET EUROPEEN

(11) **EP 0 566 209 B1**
(45) Date de publication et mention de la délivrance du brevet: **23.04.1997**
(21) Numéro de dépôt: 93201093.7
(22) Date de dépôt: 15.04.1993
(51) Int. Cl.: H04Q 3/66

(54) **Acheminement de communications à optimisation de revenu pour réseaux de télécommunications**
Kosten-optimierte Weglenkung in einem Telekommunikationsnetz
Cost-optimised routing in a telecommunications network

(30) Priorité: 17.04.1992 FR 9204814
(43) Date de publication de la demande: 20.10.1993
(73) Titulaire: FRANCE TELECOM, 75015 Paris (FR)
(72) Inventeur: Lebourges, Marc, F-78910 Orgerus (FR)
(74) Mandataire: Cabinet Martinet & Lapoux

(56) Documents cités:
- EP-A- 0 258 654
- EP-A- 0 276 754
- PROC. OF THE 12TH INTERNATIONAL TELETRAFFIC CONGRESS ITC-12, Juin 1988, TORINO, IT pages 998 - 1005 DZIONG ET AL.
- PROC. OF THE 13TH INTERNATIONAL TELETRAFFIC CONGRESS ITC-13, Juin 1991, COPENHAGEN, DK, pages 237-242; Tibas et al.

## Description

La présente invention a trait d'une manière générale à l'acheminement de communications dans des réseaux de télécommunications.

Les réseaux de télécommunications sont constitués d'un ensemble de noeuds de commutation interconnectés entre-eux par des circuits, appelés faisceaux, et définissent des structures maillées plus ou moins complexes, par exemple à l'échelle nationale avec plusieurs niveaux hiérarchiques pour le Réseau Téléphonique Commuté.

L'état de la technique revête principalement cinq procédés d'acheminement des communications au sein des réseaux : l'acheminement fixe, à débordement, à partage de charge, multi-période et adaptatif.

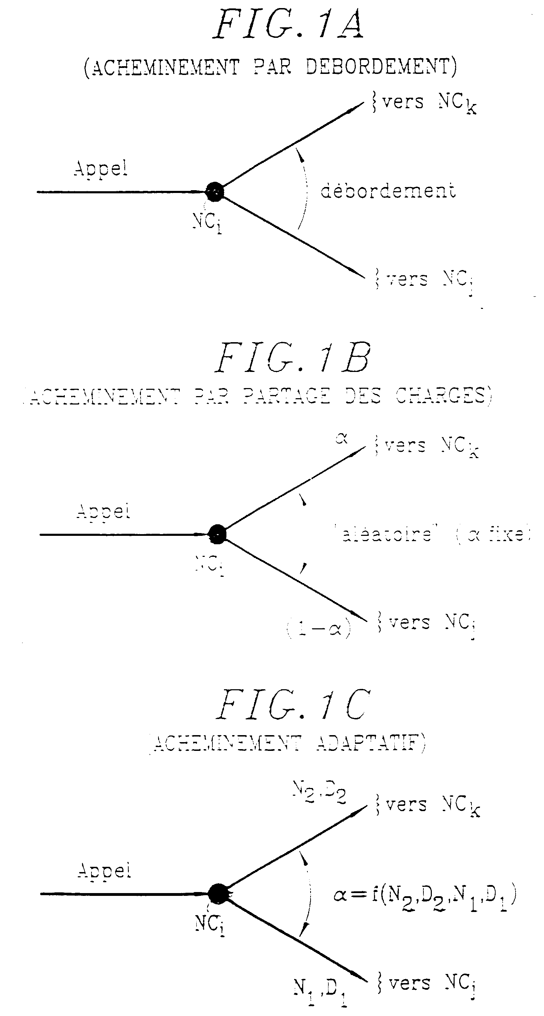

Les figures 1A, 1B et 1C schématisent trois de ces cinq procédés au niveau d'un noeud de commutation quelconque NCᵢ du réseau relié à d'autres noeuds ... NCₕ, ... NCⱼ ... par des chemins respectifs.

Concernant l'acheminement par débordement dont le principe est représenté schématiquement à la Figure 1A, le noeud NCᵢ achemine toutes les communications relatives à une origine donnée et une extrémité donnée chaque fois suivant un même chemin prioritaire, par exemple en direction du noeud NCⱼ, excepté dans le cas d'une saturation de ce chemin prioritaire, auquel cas les communications "débordent" sur un chemin parallèle, par exemple en direction du noeud NCₖ. Tous les chemins sont préétablis lors de la planification du réseau.

Dans le cadre du partage de charge dont le principe est schématisé à la figure 1B, le noeud NCᵢ ne privilégie a priori aucun chemin tel que défini dans l'acheminement par "débordement". Ce second procédé consiste alors à acheminer une proportion α des appels suivant l'un des deux chemins par exemple vers le noeud NCₖ, une proportion (1 - α) des appels étant orientée dans l'autre desdits chemins, par exemple vers le noeud NCⱼ. Ce procédé fait appel à des tirages aléatoires.

Le dernier des procédés dit à acheminement adaptatif présenté à la Figure 1C et ici schématisé dans le cadre du partage de charge, consiste à modifier dynamiquement des paramètres d'acheminement en utilisant un principe très général de régulation par contre-réaction selon le modèle très général de l'automatique. Dans le cas présenté ici, α varie en fonction de N₁, N₂, et D₁, D₂ qui désignent le nombre d'appels dirigés vers un premier chemin, relié au noeud NCⱼ, respectivement deuxième chemin relié au noeud NCₖ, et le nombre d'appels ayant véritablement aboutis à travers ce premier chemin, respectivement deuxième chemin. Bien que décrit ici dans le cadre du partage de charge, l'acheminement adaptatif est utilisé pour de nombreuses autres applications, telles que l'approche par capacité résiduelle.

Quels que soient les procédés précités, aucun ne met en oeuvre des critères d'optimisation de revenu dans les modèles d'acheminement proposés. Des mécanismes de commande plus récents tenant compte de facteurs économiques pour l'exploitation des réseaux sont néanmoins apparus ces dernières années. Ainsi, à titre d'exemple, on peut citer le système DCR-5 de Bellcore décrit dans l'article "Implementing Dynamic Routing in the Local Telephone Companies of USA", V.P Chaudhary, K.R Krishnan et C.D Pack; 13ème conf. ITC, p. 87-91, Copenhague, 1991. Ce système de routage fait appel à un procédé adaptatif selon lequel des indicateurs utilisés pour l'acheminement adaptatif des appels sont gérés en intégrant la notion de coût (perte pour l'exploitant du réseau). Il s'agit de coûts moyens à l'Erlang, modélisés et calculés indépendamment du fonctionnement du réseau en temps réel. Périodiquement pour des configurations données du réseau, plusieurs revenus perdus supportés par l'exploitant du réseau sont calculés si des appels sont acheminés par des chemins admissibles respectifs. Ces coûts ou revenus perdus sont calculés compte tenu de blocages d'appels ultérieurs à l'acheminement desdits appels. En d'autres termes, il est simulé l'effet d'un appel sur le blocage d'appels ultérieurs, ces appels "perdus" représentant des pertes de revenus pour l'exploitant du réseau. L'optimisation de revenu dans un tel système consiste alors à maximiser le nombre d'appels ou plus précisément minimiser le nombre d'appels bloqués en acheminant les appels sur les chemins entraînant un minimum de blocage d'appel. En effet, les pertes induites par le blocage d'appels sont traduites en terme de revenus perdus en fixant un revenu identique par Erlang pour chaque noeud de commutation du réseau.

Deux inconvénients principaux apparaissent dans la technique antérieure telle que définie ci-dessus :
- Tous les procédés d'acheminement décrits initialement sont généralement complétés, pour une mise en oeuvre optimale, par des mécanismes de commande spécifique ayant trait à la minimisation des appels perdus, à la protection du réseau, ou par exemple, comme décrit ci-dessus, à l'optimisation de revenu. Des développements spécifiques sont alors nécessaires pour chaque procédé et commande à implanter dans le réseau, ne conduisant pas à une unité d'intégration des divers modules implantés concernant les divers mécanismes; en conséquence, une unité et une cohérence fonctionnelles ne peuvent pas être atteintes ; et
- le mécanisme d'optimisation de réseau décrit ci-dessus dans le cadre du système DCR-5 de Bellcore implique par le fait même qu'un revenu donné par Erlang est affecté à chaque noeud de commutation, qu'un tel mécanisme ne peut être implanté globalement dans l'ensemble du réseau, tel que le Réseau Téléphonique Commuté.

Ces revenus "modélisés" par Erlang pour chacun des noeuds de commutation du réseau possèdent une signification économique, et un seul et unique algorithme ne peut gérer l'intégralité d'un réseau à plusieurs niveaux hiérarchiques. En effet, dans le cas par exemple du Réseau Téléphonique Commuté, il n'est pas envisageable de mettre en oeuvre un tel procédé de façon globale sur la totalité dudit réseau. Cela n'aurait économiquement pas de sens : selon ce procédé, un noeud de commutation est choisi parmi plusieurs noeuds de niveau hiérarchique homogène par calcul de coûts de blocage d'appels respectifs sur des faisceaux, suite à des acheminements d'appels sur lesdits faisceaux. Si cette simulation était réalisée pour plusieurs niveaux hiérarchiques du réseau, elle conduirait de manière évidente à des résultats incohérents dans l'acheminement d'un appel donné.

Outre ces deux inconvénients principaux, des fonctions restent non exploitées selon la technique antérieure telle que connue par exemple des documents : Proceeding of the 12th International Teletraffic Congress ITC. 12, juin 1988, Torino, Italie, pages 998-1005 DZIONG et al, et de la publication EP-A-0 276 754 :
- l'optimisation économique de l'acheminement d'une communication d'une origine à une destination;
- l'utilisation de capacités disponibles en temps réel en cas de pannes, et cela indépendamment de plans d'acheminement préétablis lors d'une planification du réseau;
- les différences des modes d'acheminement entre réseaux à modes de commutation différents (circuit, paquet,...) interdisent jusqu'à présent une optimisation globale multi-réseaux pour des communications utilisant ces différents réseaux (accès à un réseau de paquets via le réseau commuté); et
- la modélisation des revenus dans les méthodes actuelles ne permet pas une adaptation aux différents modes de tarification (à l'établissement, à la durée, au débit), aux fluctuations des conditions de trafic et au comportement des usagers (répétition d'appels, etc.).

La présente invention vise à remédier aux inconvénients précités selon la technique antérieure en fournissant un procédé d'acheminement offrant une gestion dynamique d'objets d'acheminement dépendant du fonctionnement en temps réel du réseau.

A cette fin, un procédé d'acheminement d'une communication à établir lors de la procédure d'appel de celle-ci, en un noeud de commutation d'un réseau de télécommunications, est caractérisé en ce que
une liste d'objets d'acheminement est associée audit noeud, chacun desdits objets d'acheminement incluant cinq paramètres qui sont un paramètre de chemin amont, un paramètre d'origine, un paramètre de destination, un paramètre de service et un paramètre de chemin aval, chacun desdits cinq paramètres étant décrits sous une forme arborescente pouvant être triviale pour certains d'entre-eux, et
pendant ladite procédure d'appel est transmis un message d'appel incluant deux premiers éléments de signalisation définissant l'origine et la destination de l'appel et, dans le cas où une description arborescente dudit paramètre de chemin amont est non triviale, un second élément de signalisation définissant un chemin amont emprunté par le message dans le réseau depuis l'origine jusqu'audit noeud de commutation,
et le procédé comprend les étapes suivantes :
   - recherche d'objets d'acheminement de ladite liste incluant des paramètres d'origine, de destination, et de chemin amont compatibles avec des éléments de signalisation dudit message d'appel en ce que leurs descriptions arborescentes ont des profondeurs inférieures respectivement à celles desdits éléments de signalisation, en des objets compatibles,
   - sélection parmi lesdits objets compatibles d'un objet d'acheminement donné ayant un gain maximal égal à une différence maximale entre des recettes et des coûts comptabilisés en temps réel dépendant d'informations de taxation relativement à diverses communications associées logiquement audit objet donné, et
   - association logique de ladite communication à établir audit objet d'acheminement donné sélectionné, afin d'acheminer la communication suivant un chemin aval défini par le paramètre de chemin aval dudit objet d'acheminement donné sélectionné et mettre à jour le gain dudit objet d'acheminement donné sélectionné en fonction de la taxation de la communication après l'établissement de celle-ci, un troisième élément de signalisation définissant ledit chemin aval étant inclus dans un message d'appel étant transmis vers un noeud suivant ledit noeud de commutation le long dudit chemin aval si ledit chemin aval défini par ledit paramètre de chemin aval dudit objet d'acheminement donné sélectionné est décrit sous une forme arborescente non triviale.

Selon une caractéristique de l'invention, lesdits objets d'acheminement de la liste sont obtenus à partir des étapes suivantes :
- à la réception de chaque message d'appel ou tous les N messages d'appel, N étant un entier prédéterminé, création d'objets nouveaux en nombre égal ou inférieur au nombre de paramètres dans un objet, chacun desdits objets nouveaux étant identique à un objet compatible audit message d'appel reçu et ayant un gain maximal à l'exception d'un paramètre respectif dont la profondeur de la description arborescente est incrémentée d'un niveau,
- calcul de gains respectifs des objets nouveaux en leur associant logiquement à chacun d'eux des communications qui lui sont compatibles, et
- suppression dans la liste, de chaque objet ayant un gain de segmentation égal à la différence, par communication, de son gain et du gain de l'objet ayant donné lieu à sa création multipliée par le nombre de communications associées logiquement audit objet, qui est trop faible en dépendance d'une limitation en nombre d'objets d'acheminement de ladite liste.

Avantageusement, l'étape de sélection comprend préalablement :
une sous-étape de classement des objets compatibles par famille de profondeur d'arborescence homogène pour leurs cinq paramètres, et
une sous-étape de correction de gain par communication pour chaque objet d'une famille donnée par déduction d'un gain de segmentation par communication relativement à une famille de référence, afin que ladite étape de sélection consiste à sélectionner un objet d'acheminement ayant un gain corrigé maximal.

Selon une autre caractéristique de l'invention, les coûts comptabilisés en temps réel dépendant d'informations de taxation modifient le gain d'un objet d'acheminement dans les deux cas suivants :
a) lors d'un débordement d'un chemin aval défini par un paramètre de chemin aval d'un premier objet compatible sélectionné ayant un gain maximal, lequel débordement oriente l'appel vers un chemin aval défini par un paramètre de chemin aval d'un second objet d'acheminement compatible ayant un gain immédiatement inférieur audit gain maximal, un coût induit par ce débordement étant égal à une différence entre un premier gain attendu, égal au gain par appel dudit premier objet si l'appel avait été acheminé selon ledit chemin aval défini par le paramètre de chemin aval dudit premier objet, et un second gain, égal au gain de l'appel sur le chemin aval défini par ledit paramètre de chemin aval dudit second objet; et
b) lors d'un refus définitif par ledit noeud d'une communication à établir, un coût induit par ce refus étant égal à un gain attendu par communication pour un objet ayant donné lieu audit refus.

D'autres caractéristiques et avantages de la présente invention apparaîtront plus clairement à la lecture de la description suivante, en référence aux dessins annexés correspondants, dans lesquels :
- les figures 1A, 1B et 1C, déjà commentées, illustrent schématiquement des procédés d'acheminement selon la technique antérieure;
- la figure 2 est un bloc-diagramme hiérarchique du Réseau Téléphonique Commuté;
- la figure 3 est un bloc-diagramme illustrant la dualité réseau de transport d'information - réseau de signalisation dans le Réseau Téléphonique Commuté;
- la figure 4 est un diagramme schématique montrant l'association de listes d'objets d'acheminement à des noeuds de commutation pour la mise en oeuvre du procédé selon l'invention ;
- la figure 5 montre en détail un objet d'acheminement défini en référence à la figure 4; et
- les figures 6A, 6B et 6C montrent respectivement des exemples de description arborescente de trois paramètres d'objet d'acheminement.

A titre d'exemple non limitatif, le procédé selon l'invention est décrit ci-après dans le cadre d'un Réseau Téléphonique. Il sera apprécié au fur et à mesure de la lecture de la description suivante qu'une mise en oeuvre du procédé selon l'invention peut concerner d'autres types de réseaux de télécommunications utilisant le mode "avec connexion", c'est-à-dire des réseaux pour lesquels une procédure d'appel précède à l'établissement d'une communication à travers le réseau. Ainsi, à titre d'exemple, le procédé selon l'invention peut être exploité dans un réseau à commutation de paquet, auquel cas une optimisation économique d'une connexion entre terminaux d'usager à travers le réseau de commutation de paquets via le Réseau Téléphonique peut être mise en oeuvre dans le cadre du procédé selon l'invention.

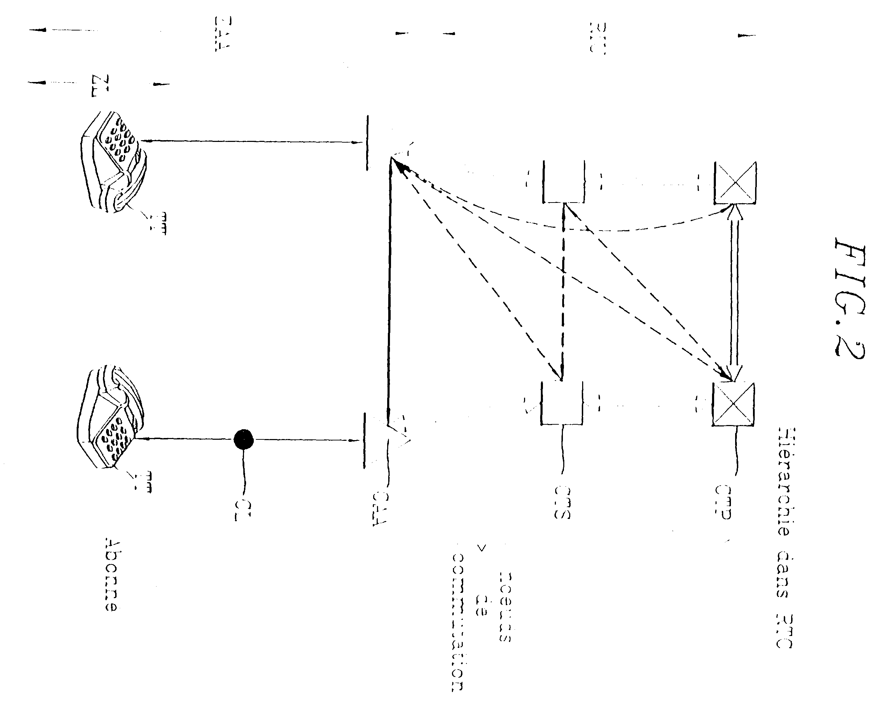

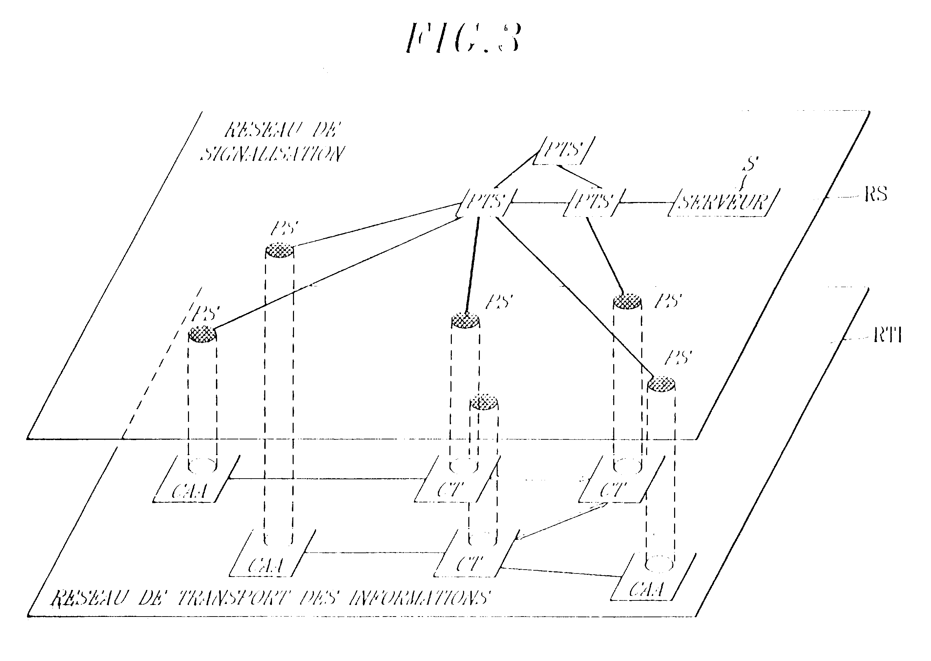

Après avoir défini succinctement les caractéristiques du Réseau Téléphonique Commuté en référence aux figures 2 et 3, et l'implantation spécifique d'objets d'acheminement au niveau de noeuds de commutation du Réseau, le procédé selon l'invention sera décrit au regard de trois procédures élémentaires qui le composent, et qui sont :
- une procédure de gestion de liste d'objet d'acheminement au niveau de chaque noeud;
- une procédure d'acheminement de communication au niveau de chaque noeud de commutation; et
- une procédure de mise à jour de valeur de gain par objet d'acheminement.

En référence à la figure 2, le Réseau Téléphonique Commuté (RTC) est composé d'une pluralité de noeuds de commutation répartis, à titre d'exemple, en quatre niveaux hiérarchiques différents, en fonction particulièrement de leurs fonctions respectives au sein du Réseau Téléphonique Commuté. Dans le sens croissant de la hiérarchie, on distingue les centres locaux CL, les centres à autonomie d'acheminement CAA, les centres de transit secondaires CTS et les centres de transit principaux CTP. Des terminaux téléphoniques d'usager TT sont rattachés selon la figure 2, ou bien à un centre à autonomie d'acheminement CAA ou bien à un centre local CL. Au sein du réseau RTC, une communication est établie entre deux terminaux via un chemin donné à travers des noeuds de commutation, par exemple selon une stratégie d'acheminement telle que celles définies dans le préambule de la description. Au niveau topologique du réseau sont distinguées deux couches de niveau hiérarchique qui sont la zone à autonomie d'acheminement ZAA qui intègre les centres locaux CL et les centres à autonomie d'acheminement CAA, et le réseau interurbain RIU qui comprend les commutateurs de transit principaux et secondaires CTP et CTS.

Dans le cadre du traitement de la signalisation (établissement d'appel, taxation,...) dans le Réseau Téléphonique, il est conceptuellement intéressant de distinguer deux "sous-réseaux" dans le Réseau Téléphonique, comme montré dans la figure 3.

Ces deux "sous-réseaux" sont le réseau de transport des informations RTI et le réseau de signalisation RS. Le réseau de transport des informations assure le transport de l'information proprement dite échangée entre terminaux d'abonné (parole ou données). Le réseau de signalisation RS assure pour sa part le transport et la gestion de messages pour l'exploitation du réseau, la signalisation d'établissement d'appel, les résultats de taxation et éventuellement, des observations de trafic, des contenus de banques de données (tables, programmes), etc... Les noeuds de commutation qui sont représentés dans la figure par des Centres à Autonomie d'Acheminement CAA et des Centres de Transit CT, sont associés au Réseau de Transport des Informations dans leur fonction de commutation et de transport. Des points de signalisation PS et points de transfert de signalisation PTS sont rattachés au Réseau de Signalisation. Ils constituent respectivement des noeuds de raccordement au Réseau de Transport des Informations RTI, en particulier des accès aux autocommutateurs des centres CAA et CT pour présenter leurs messages de signalisation, et des modules de fonction de transfert de la signalisation. Un serveur S a volontairement été représenté sur la figure 3 pour illustrer la possibilité d'un accès à un contenu de banques de données mémorisé dans ce serveur S, par les points de transfert de signalisation PTS. En pratique, des liaisons de signalisation dans lesquelles transitent les messages dans le Réseau de Signalisation peuvent être des intervalles de temps de multiplex MIC à un débit de 64 kbit/s.

La structure générale du Réseau Téléphonique Commuté a été précisée ci-dessus afin de s'y référer pour la mise en oeuvre du procédé selon l'invention, notamment lors de la "diffusion" d'informations de taxation dans le Réseau de Signalisation RS.

Il est à noter que les différentes fonctionnalités de chaque niveau hiérarchique dans le réseau RTC, telles que les fonctions de transit et sécurisation par débordement via les liaisons établies dans le réseau interurbain pour relier entre eux plusieurs centaines de centres à autonomie d'acheminement CAA soit directement, soit par l'intermédiaire de centres de transit, au moyen de plusieurs milliers de faisceaux, importent peu dans le cadre du procédé selon l'invention. En effet, afin d'appréhender la mise en oeuvre du procédé selon l'invention dans le cadre du Réseau Téléphonique, il est nécessaire de concevoir ce dernier sous une forme complètement dénuée de ses fonctions d'acheminement proprement dites concernant les règles et les mécanismes de sélection d'un chemin donné. Le réseau apparaît alors comme une structure maillée de noeuds de commutation interconnectés entre eux au moyen de faisceaux. Pour cela, seul le terme "noeud de commutation" noté NC sera utilisé par la suite.

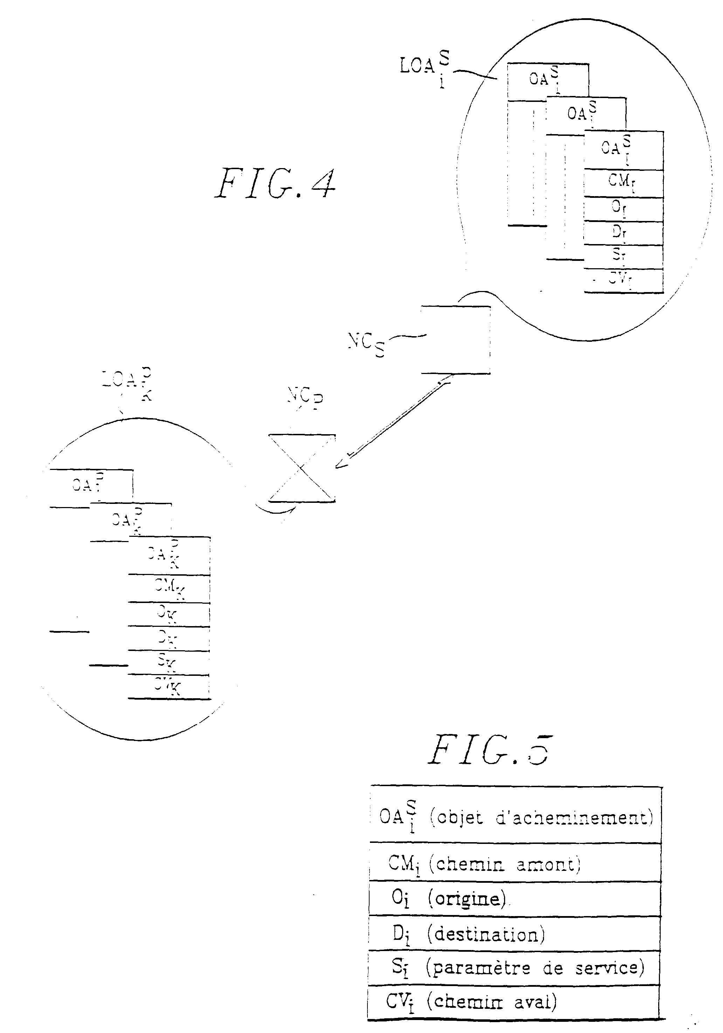

En référence à la figure 4, des listes d'objets d'acheminement respectives LOA^{P}ₖ et LOA^{S}ᵢ sont représentées symboliquement sous forme de deux ensembles de "fiches d'acheminement" associés à deux noeuds de commutation respectifs NC_{P} et NC_{S}. Chaque noeud de commutation du réseau est ainsi associé à une liste d'objets d'acheminement respective. En pratique, l'architecture la mieux adaptée au procédé selon l'invention est une architecture distribuée sur les noeuds de commutation du réseau, et donc l'association d'une liste d'objets d'acheminement à un noeud se traduit par une mémorisation de la liste au niveau du noeud de commutation. Néanmoins, une architecture centralisée rentre dans le cadre du procédé, auquel cas plusieurs listes d'objets d'acheminement respectivement associées à plusieurs noeuds de commutation sont mémorisées dans un centre de gestion d'acheminement unique relié aux noeuds. Comme il sera vu par la suite, ces listes d'objets d'acheminement sont gérées dynamiquement. Chaque liste d'objets d'acheminement associée à un noeud de commutation respectif NC_{P} d'indice P, ou NC_{S} d'indice S, est constituée d'une pluralité d'objets (fiches) d'acheminement tels que OA^{P}ₖ, k variant entre 1 et K, ou OA^{S}ᵢ, i variant entre 1 et I, comme montré à la figure 4.

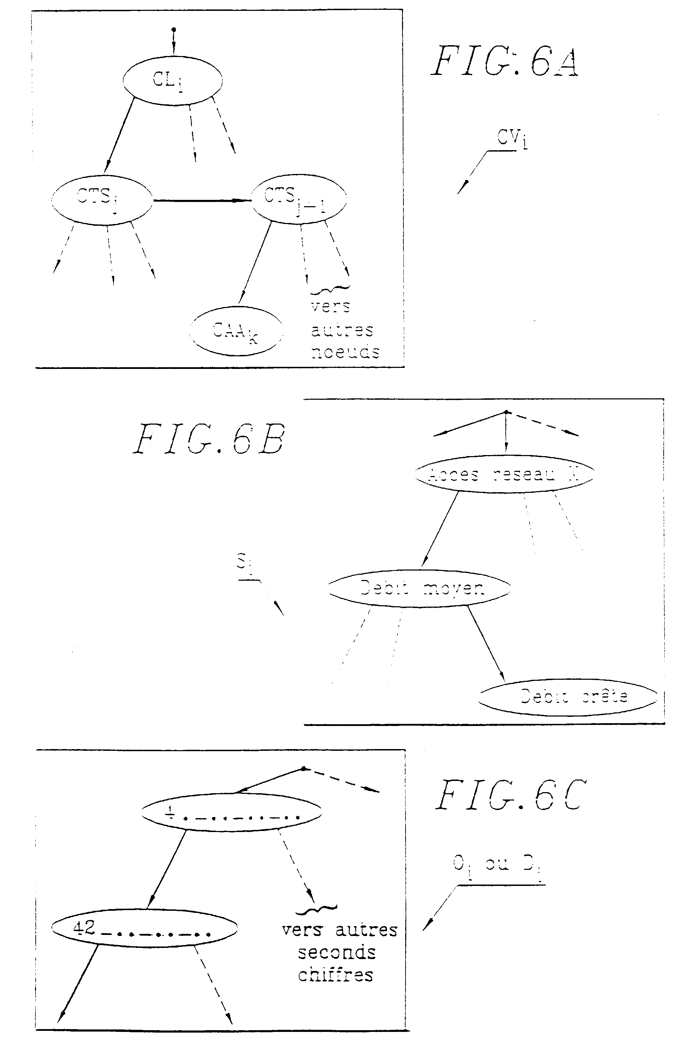

La Figure 5 montre plus précisément, de façon modélisée, un objet d'acheminement OA^{S}ᵢ dans une liste associée à un noeud de commutation NC_{S}. Chaque objet d'acheminement, ici OA^{S}ᵢ, est constitué de cinq paramètres qui sont un paramètre de chemin amont CMᵢ, un paramètre d'origine Oᵢ, un paramètre de destination Dᵢ, un paramètre de service Sᵢ, et un paramètre de chemin aval CVᵢ. Tous ces paramètres sont décrits de manière arborescente. Au niveau d'un noeud de commutation du réseau, la liste correspondante associée est utilisée pour l'acheminement des appels transitant par ledit noeud, tel que décrit ultérieurement. L'arborescence des paramètres peut être introduite de la manière suivante :
- les paramètres d'origine Oᵢ et de destination Dᵢ s'écrivent sous la forme de numéro téléphonique partiel (préfixe) ou complet (47-32-..-..- ou 47-32-17-18), une telle représentation intégrant ce niveau de description arborescente compte tenu de la signification de chaque chiffre pour l'acheminement d'un appel;
- les paramètres de chemin amont CMᵢ et chemin aval CVᵢ d'un objet d'acheminement d'une liste associée à un noeud de commutation donné désignent respectivement une suite de noeuds de commutation traversés précédant le noeud donné, y compris le noeud donné, et une suite de noeuds de commutation succèdant au noeud donné. Il est clair qu'une autre représentation arborescente pourrait être choisie pour les paramètres de chemin amont CMᵢ et de chemin aval CVᵢ, telle que par exemple une désignation en terme de liaisons entre noeuds de commutation;
- alors que les précédents paramètres Oᵢ, Dᵢ, CMᵢ et CVᵢ sont décrits par une arborescence de nature "topologique", le paramètre de service Sᵢ, est décrit par une arborescence relative à l'importance de conditions techniques nécessaires à une communication donnée. Ainsi, par exemple, par ordre d'importance, il pourra être défini des contraintes techniques, un débit moyen, et un débit crête.

Il a été précisé ci-dessus le contenu et la structure de l'information sous forme de listes d'objets d'acheminement nécessaires à la mise en oeuvre du procédé selon l'invention. Chaque liste d'objets d'acheminement associée à un noeud de commutation respectif du Réseau Téléphonique Commuté selon la réalisation préférée n'est pas statique mais est gérée dynamiquement dans le noeud selon un objectif d'optimisation de revenu lors de l'acheminement de chaque communication transitant à travers le noeud de commutation associé. Comme il sera vu par la suite, cet objectif d'optimisation de revenu est fondé sur l'association à chaque objet d'acheminement de la liste, d'une variable d'intensité de gain qui est une différence de coûts et de recettes calculés relativement à des informations existantes dans le réseau, informations offrant en temps réel une valeur de coût pour un service offert, telles que les informations disponibles dans les compteurs de taxe dans les noeuds de commutation.

Les figures 6A, 6B et 6C illustrent respectivement trois représentations schématiques de la description arborescente de trois paramètres "chemin aval" CVᵢ , "service" Sᵢ , et "origine" Oᵢ ou "destination" Dᵢ inclus dans l'un OAᵢ des objets d'acheminement d'une liste associée à un noeud de commutation. Ainsi, concernant le paramètre de chemin aval CVᵢ, celui-ci est décrit en une arborescence de noeuds de commutation constituant un chemin dans le Réseau Téléphonique ; à titre d'exemple, un paramètre de chemin aval CVᵢ comprend une suite d'adresses de noeuds à partir du noeud courant, tels que CLᵢ, CTSⱼ₊₁ et CAAₖ en reprenant la terminologie des noeuds de commutation, dans le réseau téléphonique. De manière similaire, chaque paramètre de service Sᵢ est représenté par une arborescence, par ordre d'importance, de services requis par une communication. Sur la figure 6B, à titre d'exemple, un paramètre de service Sᵢ peut comprendre une suite de sous-paramètres définissant un accès à un réseau particulier supportant un débit moyen et un débit crête donnés. La figure 6C est relative aux paramètres d'origine Oᵢ ou de destination Dᵢ.

L'arborescence de certains paramètres peut être limitée volontairement à des fins de simplification de l'implantation du procédé selon l'invention. Ainsi, en limitant par exemple la description arborescente des paramètres de chemin aval CVᵢ et de chemin amont CMᵢ sous forme triviale aux seuls faisceaux entrant et sortant correspondants respectivement, seule une information locale est nécessaire au noeud de commutation concerné sans qu'il soit nécessaire de transporter des éléments de signalisation par le réseau de signalisation RS tout au long de l'établissement de la communication.

Après avoir défini la nature des listes d'objets d'acheminement associées à des noeuds respectifs, le procédé selon l'invention est maintenant décrit, notamment au regard des trois procédures élémentaires le constituant :
- la procédure de gestion d'une liste d'objets d'acheminement associée à un noeud donné;
- la procédure de traitement des appels de communication dans un noeud donné, et
- la procédure de mise à jour d'une variable d'intensité de gain pour un objet d'acheminement d'une liste associée à un noeud donné.

### Procédure de gestion d'une liste d'objets d'acheminement associée à un noeud donné.

Au niveau de chaque noeud de commutation du réseau, une liste d'objets d'acheminement associée est gérée dynamiquement afin qu'elle ne contienne que des objets dits "à gain de segmentation maximal". Comme il sera vu ultérieurement lors de la description des deux procédures suivantes, à chaque objet d'acheminement est associé un gain égal à une somme algébrique de recettes et de coûts par unité de temps, lesdites recettes et coûts étant relatifs respectivement à des informations de comptes de taxes pour diverses communications établies associées logiquement audit objet d'acheminement et à des refus de prise ou de débordement pour des appels refusés sur des ressources, telles que faisceaux et noeuds de commutation, utilisées par lesdites communications établies.

En revenant à la figure 4, lorsqu'un message d'appel acheminé par le réseau de signalisation (figure 3) atteint un noeud de commutation donné NC_{P}, l'acheminement de la communication associée au message d'appel dépend des choix offerts par les différents objets d'acheminement OA^{P}ₖ de la liste LOA^{P}ₖ associée au noeud de commutation NCₚ. La procédure d'appel pour établir une communication consiste en la transmission à travers le Réseau de Signalisation RS d'un message d'appel comprenant, sous la même forme codée que les paramètres d'un objet d'acheminement, des éléments identifiant l'appel entrant dans les noeuds.

Le message d'appel comprend deux premiers éléments de signalisation qui définissent l'origine et la destination de la communication associée au message d'appel, en terme de numéros téléphoniques dans la réalisation préférée.

En outre, selon une première variante, le message d'appel comprend un second élément de signalisation qui définit le chemin déjà emprunté par l'appel en amont et jusqu'au noeud donné.

Selon une seconde variante de l'invention, relativement à ce qui a été souligné en référence aux figures 6A, 6B et 6C, la description arborescente des paramètres de "chemin amont" CM et "chemin aval" CV peut être réduite uniquement aux seuls faisceaux entrant et sortant; pour cette variante, le second élément de signalisation n'est pas utile puisque chaque noeud de commutation est à même d'établir localement l'adresse du faisceau entrant ou du noeud de commutation amont sans recourir à un message de signalisation.

Dans le noeud de commutation donné du Réseau Téléphonique est recherché l'ensemble des objets d'acheminement compatibles avec le message d'appel, c'est-à-dire les objets d'acheminement comprenant des paramètres d'origine, de destination et de chemin amont dont les descriptions arborescentes constituent respectivement des débuts de description arborescente des éléments de signalisation du message d'appel. Ainsi, à titre d'exemple, le paramètre de destination constitué du préfixe "27 - 80 - .. - .." est compatible avec l'élément de signalisation de destination "27 - 80 - 17 - 18" d'un numéro téléphonique d'un message d'appel. Parmi ces objets compatibles, un objet est sélectionné pour l'acheminement de la communication associée à l'appel et cet objet est l'objet ayant un gain par communication maximal, gain calculé à partir d'informations de taxation, comme il sera détaillé ultérieurement. La communication est alors associée logiquement à l'objet d'acheminement sélectionné pour être acheminée suivant le chemin aval du paramètre "chemin aval" dudit objet.

Selon la procédure de gestion de liste d'objets selon l'invention, chacune des listes d'objets d'acheminement est gérée dynamiquement en fonction de critères économiques. Cette procédure conduit à une convergence vers des listes d'objets d'acheminement optimales à un instant donné, par création ou suppression d'objet d'acheminement les constituant.

La procédure de gestion de liste d'objets est maintenant décrite en détail.

Comme vu précédemment, à chaque objet d'acheminement correspond un gain égal à une différence de recettes et de coûts relatifs à diverses communications téléphoniques pour lesquelles ledit objet d'acheminement a été sélectionné lors de procédures d'appel respectives. Sachant que chacun des paramètres d'un objet d'acheminement est décrit de manière arborescente comme montré aux figures 6A, 6B et 6C, il est possible de "segmenter" ces paramètres, c'est-à-dire "découper" l'arborescence d'un paramètre en deux, ou inversement "fusionner", pour un type donné de paramètres, deux arborescences de deux paramètres de même type appartenant à deux objets d'acheminement respectifs. Cette notion importante permet d'appréhender la définition de "gain de segmentation". Il est appelé "gain de segmentation" d'un objet d'acheminement pour un paramètre donné, le produit d'une part, de la valeur absolue de la différence entre le gain par communication associé audit objet d'acheminement et le gain par communication associé à un père de l'objet pour ledit paramètre donné, et d'autre part, du nombre de communications en cours associées logiquement audit objet. Le père d'un objet d'acheminement pour un paramètre donné est un second objet d'acheminement dont tous les paramètres sauf un ont des descriptions arborescentes identiques aux paramètres dudit objet d'acheminement, ledit un paramètre ayant une description arborescente se situant en amont d'un niveau de profondeur par rapport à la description arborescente du paramètre dudit objet d'acheminement.

Cette notion de gain de segmentation est importante dans le cadre de l'invention. Elle contribue en effet à évaluer l'intérêt économique dans la distinction entre deux objets d'acheminement dont les descriptions arborescentes d'un même paramètre sont différentes d'un niveau de profondeur. A titre d'exemple, il est supposé que la description arborescente d'un paramètre de chemin aval CV d'un objet d'acheminement donné consiste en un noeud de commutation situé en aval du noeud courant; il peut être économiquement intéressant de déterminer dans le noeud courant pour l'acheminement des communications, compte tenu des descriptions arborescentes fixées des autres paramètres, non plus un noeud de commutation aval mais deux noeuds. Dans ce cas là, il apparaît que le gain de segmentation de cet objet incluant une description arborescente du paramètre "chemin aval" sous la forme de deux noeuds, relativement à l'objet à description arborescente à noeud unique, prend une valeur relativement élevée. Cette notion de gain de segmentation est essentielle et ne doit pas être confondue avec la notion de gain.

La procédure de gestion de liste d'objets d'acheminement doit simultanément satisfaire deux conditions :
- d'une part, le nombre d'objets d'acheminement au niveau de chacun des noeuds de commutation ne doit pas être trop élevé afin qu'ils puissent être gérés en temps réel; et
- d'autre part, chaque objet d'acheminement existant doit offrir une solution économique intéressante pour l'exploitant du réseau.

Pour cela, un processeur de gestion de liste d'objets d'acheminement associé au noeud décide, lors de la réception d'un message d'appel, de l'opportunité d'incrémenter d'un niveau de profondeur déterminé la description arborescente des cinq paramètres de l'objet d'acheminement compatible avec le message d'appel ayant un gain maximal. A chaque message d'appel sont ainsi créés des objets par des incrémentations respectives d'un niveau des arborescences des paramètres de l'objet compatible ayant un gain maximal. Selon une caractéristique de l'invention, il est néanmoins envisagé de ne pas créer des objets nouveaux pour chaque appel relativement aux paramètres de l'objet d'acheminement compatible avec l'appel ayant un gain maximal et limiter cette création à un appel tous les N appels, N étant un entier prédéterminé. Cette possibilité permet d'établir un compromis entre la vitesse d'adaptation de la segmentation des objets en fonction de la configuration du trafic et la charge en traitement nécessaire à cette procédure de gestion de liste d'objets. Selon cette réalisation préférée, cinq nouveaux objets d'acheminement, dans chacun desquels quatre paramètres demeurent inchangés, sont ainsi créés puisque l'objet d'acheminement compatible avec l'appel ayant un gain maximal inclut cinq paramètres (chemin amont, origine, destination, service et chemin aval). Puis pour chacun des cinq nouveaux objets d'acheminement est calculé un gain de segmentation respectif compte tenu du gain affecté à l'objet d'acheminement (père des objets nouveaux) compatible avec le message d'appel, et des gains pour chacun des cinq objets nouveaux.

Selon une première variante de l'invention, le gain de chacun des objets nouveaux correspondant à un message d'appel est maintenu à zéro jusqu'à ce que des informations de recettes et de coûts viennent incrémenter ce gain. Le nombre d'appels associés logiquement à chaque objet nouveau est initialisé à 1 en l'attente de nouveaux appels. Une seconde variante consiste à mettre à jour en temps réel les gains et nombre d'appels associés logiquement à chaque objet nouveau par simulation. Cette simulation consiste pour les cinq objets nouveaux à affecter à chacun d'eux des communications respectives avec lesquels ils sont compatibles, puis à calculer de nouveaux gains pour ces objets nouveaux.

Ne sont maintenus dans la liste que les objets à gain de segmentation maximal. Les objets à gain de segmentation trop faible sont détruits et toutes les communications qui leur sont associées sont alors associées aux pères respectifs des objets détruits. A titre explicatif, si un objet à gain positif inclut un paramètre de chemin aval de profondeur nulle, cela signifie que la communication associée au message d'appel peut indifféremment être acheminée à partir du noeud de commutation courant vers n'importe quel noeud de commutation adjacent, sans impact significatif d'un point de vue économique pour l'exploitant du réseau. Inversement, si la profondeur d'un paramètre est supérieure à 1, telle qu'égale à quatre comme montré dans la figure 6A pour le chemin aval CVᵢ, cela signifie qu'il est économiquement intéressant de prédéterminer dans le noeud courant, l'acheminement (CLᵢ, CTSⱼ, CTSⱼ₊₁, CAAₖ en reprenant la terminologie du Réseau Téléphonique Commuté) que suivra la communication associée à l'appel.

Il en résulte que le nombre d'objets nouveaux peut être inférieur au nombre de paramètres d'un objet d'acheminement, c'est-à-dire cinq. En effet, il est possible que l'un ou plusieurs des objets soit en extrémité d'arborescence, soit naturellement (ex : numéro de téléphone complet), soit parce que l'arborescence d'un paramètre donné, telle que celle du paramètre de chemin aval, a volontairement été limitée. Le procédé selon l'invention peut être ainsi implanté en limitant les arborescences des chemins aval et amont à une forme triviale, auquel cas celles-ci ne constituent plus alors de véritables arborescences et sont limitées aux seuls faisceaux entrant et sortant respectifs pour chaque objet d'acheminement. Ce choix de limitation de la description arborescente de paramètres donnés peut également résulter de considérations organisationnelles ou techniques. A titre d'exemple, une catégorie d'indicatif appelant ou appelé peut ne donner accès qu'à un sous-ensemble de chemins aval. Dans tous les cas précités, lorsque l'extrémité de l'arborescence est atteinte pour un paramètre d'un objet d'acheminement donné, aucun objet nouveau ne sera alors créé pour ce paramètre.

Ainsi, en testant pour chaque appel l'opportunité d'incrémenter au moins de 1 la profondeur de la description arborescente de chaque paramètre ou d'un nombre limité de paramètres dans un objet à gain maximal compatible avec le message d'appel en des nouveaux objets, et en ne maintenant que les nouveaux objets d'acheminement à gain de segmentation maximal, c'est-à-dire les objets présentant un intérêt économique du point de vue de l'exploitant du réseau, il est obtenu pour un état donné du réseau, une configuration optimale, du point de vue économique, des objets d'acheminement au niveau de chaque noeud de commutation.

En effet, avant cette "convergence" vers une configuration économique optimale d'objets d'acheminement, des objets d'acheminement nouveaux sont créés pour étudier l'opportunité économique d'acheminer une communication selon un objet nouveau et inversement des objets d'acheminement sont détruits si leur gain de segmentation est trop faible, c'est-à-dire s'il n'y a pas un intérêt économique particulier de déterminer dans le noeud une arborescence spécifique pour un paramètre donné.

L'initialisation des listes d'objets d'acheminement associées aux noeuds de commutation peut être quelconque puisque cette procédure de gestion de liste d'objets d'acheminement a pour but de faire converger le contenu de ces listes vers des objets d'acheminement optimaux. Ainsi, par exemple, des matrices fixes existantes d'acheminement peuvent être utilisées pour créer les objets d'acheminement initiaux. La procédure de gestion de liste d'objets assure ensuite la convergence des listes initiales vers des listes optimales d'un point de vue économique, compte tenu de la notion de gain de segmentation.

En bref, grâce à cette procédure de gestion de liste d'objets, dans chacune des listes associées à des noeuds respectifs ne sont maintenus uniquement les objets d'acheminement dont les caractéristiques arborescentes des paramètres les constituant présentent un intérêt économique du point de vue de l'exploitant du Réseau.

L'initialisation minimale des listes d'objets de chaque noeud de commutation du réseau consiste à implanter un seul objet d'acheminement par noeud de commutation. Cette simplicité d'initialisation peut alors conduire à des temps de convergence relativement longs vers les listes d'objets d'acheminement optimales. C'est pourquoi, comme il a été signalé précédemment, il est préférable d'initialiser les objets de manière à reproduire les matrices d'acheminement correspondantes à un procédé d'acheminement de type connu.

Le problème d'initialisation des listes d'objets se pose différemment selon qu'il s'agit d'initialiser l'ensemble du réseau, ou seulement un noeud de commutation additionnel qui est à raccorder à un réseau existant, les risques d'instabilité ou de convergence vers des listes d'objets sous-optimales étant plus limités dans le second cas.

Afin d'accélérer la convergence vers une solution optimale de listes d'objets, stabiliser les acheminements proposés et prendre en compte les contraintes techniques ou administratives, il est possible de restreindre le parcours des arborescences des objets en interdisant des transitions montantes ou descendantes pour certaines valeurs des paramètres d'objet, par exemple en figeant leur gain. En utilisant ces restrictions, il est possible de modéliser les différentes familles d'acheminement actuellement existantes.

### Procédure de traitement des appels dans un noeud donné.

Dès la réception d'un message d'appel transmis à travers le réseau de signalisation RS, un noeud de commutation recherche dans sa liste d'objets d'acheminement tous les objets dont les paramètres sont compatibles avec des éléments de signalisation du message d'appel, c'est-à-dire tous les objets dont les paramètres sont décrits par des arborescences ayant des profondeurs inférieures aux profondeurs des arborescences des éléments du message d'appel. Deux variantes peuvent être implantées pour le traitement d'un appel.

Selon une première variante, tous les objets dont les paramètres sont compatibles avec le message d'appel sont classés par famille d'objets ayant des profondeurs d'arborescence homogènes pour leurs cinq paramètres, c'est-à-dire des profondeurs d'arborescence égales. Pour chaque famille, l'objet ayant un gain par appel maximal est sélectionné : cet objet a un certain gain de segmentation. Les familles sont ensuite scrutées une par une suivant l'ordre décroissant de gain de segmentation de leur objet ayant un gain par appel maximal. A l'intérieur d'une famille donnée, cette opération consiste à étudier l'opportunité d'acheminer l'appel suivant chacun des objets la constituant par ordre de gain par communication décroissant. L'objet retenu pour l'acheminement de la communication suivant un chemin aval donné est l'objet ayant un gain par communication maximal. Lorsque l'on change de famille, cela correspond à une perte en gain de segmentation : une certaine segmentation de l'évaluation économique de l'appel n'est pas prise en compte et l'évaluation économique qui en résulte perd donc de sa précision. Cela est pris en compte en déduisant du gain par appel pour une nouvelle famille à scruter, la différence en gain de segmentation, ramenée à un appel, relativement à la famille scrutée précédente.

Selon une seconde variante, afin d'éviter cette dernière opération de déduction de gain de segmentation lors de la réception d'un message d'appel, il est possible d'avoir des valeurs de gain par communication directement comparables pour tous les objets compatibles, quelle que soit la famille à laquelle ils appartiennent, en tenant compte automatiquement des gains de segmentation entre familles et non lorsqu'un appel doit être traité.

Le message d'appel est acheminé à travers le réseau de signalisation suivant le chemin aval défini par le paramètre chemin aval contenu dans l'objet d'acheminement à gain maximal par communication. Si l'un des noeuds dans ledit chemin aval refuse l'appel de communication, un second chemin aval déterminé par un objet d'acheminement à gain par communication immédiatement inférieur est choisi pour l'acheminement de l'appel, et ainsi de suite.

Dans le cas où l'intensité de gain d'un objet d'acheminement est négative, l'appel est refusé définitivement. Ce rejet n'induit aucun coût pour les appels utilisant le faisceau (ou les faisceaux) visé par ledit objet puisque ce n'est pas la saturation du faisceau visé qui a induit ce refus, mais l'évaluation de l'intérêt économique de la décision d'acheminer l'appel sur ce faisceau.

### Procédure de mise à jour d'une variable d'intensité de gain pour un objet d'acheminement.

Cette procédure est particulièrement importante pour la mise en oeuvre du procédé selon l'invention. Avant de la décrire précisément, il est rappelé succinctement le principe de la taxation d'une communication téléphonique établie entre deux terminaux d'abonné demandeur et demandé.

L'établissement d'une communication entre deux terminaux s'effectue tout d'abord par l'envoi d'un premier message d'appel par le centre de rattachement du terminal demandeur vers le centre de rattachement du terminal demandé à travers le Réseau de Signalisation RS. En réponse à la prise de ligne (décrochage) par le terminal demandé, un message d'accusé de réception est envoyé du centre de rattachement du terminal demandé vers le centre de rattachement du terminal demandeur et déclenche dans ce dernier la taxation de la communication établie dans un compteur de taxe attribué au terminal demandeur. Ce compteur de taxe est incrémenté pendant toute la durée de la communication entre les deux terminaux jusqu'à la libération de ligne (raccrochage) par l'un des terminaux. Il est à noter que la diffusion des données de taxation dans le Réseau de Signalisation est déjà largement développée dans le cadre du RNIS (Réseau Numérique à Intégration de Services). La mise à jour des gains s'effectue donc après l'établissement de la communication.

Il a été vu précédemment qu'à chaque objet d'acheminement est associé un gain égal à une différence de recettes et de coûts relatifs aux diverses communications téléphoniques associées logiquement audit objet.

Les communications sont à l'origine de l'incrémentation de compteurs de taxe et sont associées logiquement, c'est-à-dire utilisent pour leur acheminement dans le réseau, des objets d'acheminement respectifs.

Les recettes relatives aux gains des objets d'acheminement dépendent des comptes de taxe dans les compteurs et sont diffusées par chaque noeud constitué par un centre de rattachement de terminaux d'usager, dans le Réseau de Signalisation RS, pour incrémenter des variables de gain relatives à tous les objets d'acheminement utilisés dans les noeuds pour les communications établies traversant respectivement ces noeuds.

S'agissant du coût relatif au gain d'un objet d'acheminement, celui-ci résulte du gain manqué par un refus (blocage) des appels qui ont été tentés à travers le chemin aval défini par le paramètre de chemin aval de l'objet. Deux possibilités sont prévues.

Selon une première possibilité, l'appel déborde, c'est-à-dire est acheminé vers un chemin aval disponible défini par un second objet d'acheminement. Le coût correspond alors à la différence entre d'une part le gain attendu si la communication avait été acheminée à travers le chemin aval déterminé par le premier objet d'acheminement provoquant le refus et d'autre part le gain attendu de la communication à travers le chemin aval déterminé par le paramètre de chemin aval du second objet d'acheminement et ayant acheminé la communication par débordement. Le gain attendu de la communication pour chaque objet d'acheminement est pris égal au rapport du gain de l'objet sur le nombre de communications en cours associées logiquement à l'objet.

Selon une seconde possibilité, l'appel est définitivement rejeté au niveau du noeud de commutation (c'est-à-dire bloqué par tous les chemins aval des objets d'acheminement sélectionnés). Le coût est alors pris égal au gain attendu par appel sur le chemin aval de l'objet d'acheminement ayant donné lieu au refus.

Lorsqu'un coût, tel qu'il vient d'être défini en relation avec les deux possibilités précitées, apparaît, il est repercuté comme suit. A chaque communication en cours sur une ressource (faisceau, commutateur) dont la saturation est la cause du coût, on affecte ce coût divisé par le nombre de communications en cours sur la ressource, nombre de communications correspondant à la capacité totale de la ressource puisque celle-ci est saturée. Pour chacune de ces communications en cours, le coût est transporté par la signalisation et met à jour les valeurs de gain des différents objets qui lui sont logiquement associées dans les différents noeuds de commutation du réseau.

Ainsi, à chaque objet d'acheminement est associé une somme algébrique de recettes (comptes de taxe) et de coûts qui constitue le gain de l'objet. Si N appels sont orientés vers le chemin aval défini par l'objet d'acheminement, le gain par appel est pris égal au rapport entre le gain de l'objet d'acheminement et le nombre N de communications en cours associées logiquement à l'objet d'acheminement.

En revenant à la procédure de traitement d'appel dans un noeud de commutation, l'appel est systématiquement rejeté lorsqu'un gain d'un objet d'acheminement est nul ou négatif, c'est-à-dire lorsque la recette est inférieure ou égale au coût.

Les différentes informations de recettes et de coûts intervenant dans les valeurs de gain pour des objets d'acheminement sont obtenues par diffusion d'informations de taxation de l'origine vers la destination de l'appel dans le Réseau de Signalisation.

Lorsqu'une information de recette ou de coût (compte de taxe) est diffusée tout au long d'un appel et reçue à un instant t au niveau d'un noeud de commutation pour incrémenter une valeur de gain d'un objet d'acheminement, la valeur de gain est ensuite décrémentée à un instant t+T. Cette "fenêtre temporelle" T définie par un temporisateur permet d'obtenir une intensité de gain moyenne glissante. Elle constitue une durée d'intégration sur laquelle sont moyennés les différents gains calculés pour chaque objet d'acheminement. Cette durée T peut être définie au niveau du réseau, de chaque noeud ou même de chaque objet d'acheminement. Elle peut être déterminée en terme de temps ou bien en fonction d'évènements sur le réseau, tels que arrivée ou fin d'appel. Ainsi, la durée T peut être constante ou variée dynamiquement.

Comparativement à l'existant dans le Réseau Téléphonique Commuté, il apparait que, hormis des développements spécifiques dans le cadre de l'implantation de chacune des procédures décrites, le Réseau Sémaphore (CCITT N°7) en tant que Réseau de Signalisation est à même de supporter la signalisation spécifique à l'invention, telle que
- message d'appel plus évolué; et
- diffusion de la taxation et des coûts selon les mécanismes décrits.

De la description précédente, il en résulte que le procédé d'acheminement de communication remplace les fonctions de commande suivantes mises en oeuvre dans les noeuds de commutation des réseaux téléphoniques connus actuels ou en cours de développement :
- la traduction (initialisation et détermination des chemins en fonction de l'évolution du réseau et de son trafic);
- le partage de charge entre les noeuds et chemins;
- l'acheminement adaptatif des communications;
- le contrôle de flux des appels à chaque noeud de commutation;
- la sécurisation expansive des communications à travers tout le réseau;
- la réservation de circuits;
- l'espacement et le filtrage des appels.

Un tel mécanisme d'acheminement peut être également utilisé par l'homme du métier à des fins de simulation pour étudier le comportement d'un réseau en vue d'une configuration de trafic dans le réseau, ou d'une initialisation du réseau.

## Revendications

1. Procédé d'acheminement d'une communication à établir lors de la procédure d'appel de celle-ci, en un noeud de commutation d'un réseau de télécommunications, caractérisé en ce que
une liste d'objets d'acheminement (LOA^{P}ₖ, LOA^{S}ᵢ) est associée audit noeud (NCₚ, NCₛ), chacun desdits objets d'acheminement incluant cinq paramètres qui sont un paramètre de chemin amont (CM), un paramètre d'origine (O), un paramètre de destination (D), un paramètre de service (S) et un paramètre de chemin aval (CV), chacun desdits cinq paramètres étant décrits sous une forme arborescente pouvant être triviale pour certains d'entre-eux, et
pendant ladite procédure d'appel est transmis un message d'appel incluant deux premiers éléments de signalisation définissant l'origine et la destination de l'appel et, dans le cas où une description arborescente dudit paramètre de chemin amont est non triviale, un second élément de signalisation définissant un chemin amont emprunté par le message dans le réseau depuis l'origine jusqu'audit noeud de commutation,
et le procédé comprend les étapes suivantes :
- recherche d'objets d'acheminement de ladite liste (OA^{P}ₖ, OA^{S}ᵢ) incluant des paramètres d'origine (O), de destination (D), et de chemin amont (CM) compatibles avec des éléments de signalisation dudit message d'appel en ce que leurs descriptions arborescentes ont des profondeurs inférieures respectivement à celles desdits éléments de signalisation, en des objets compatibles,
- sélection parmi lesdits objets compatibles d'un objet d'acheminement donné ayant un gain maximal égal à une différence maximale entre des recettes et des coûts comptabilisés en temps réel dépendant d'informations de taxation relativement à diverses communications associées logiquement audit objet d'acheminement donné, et
- association logique de ladite communication à établir audit objet d'acheminement donné sélectionné, afin d'acheminer la communication suivant un chemin aval défini par le paramètre de chemin aval (CV) dudit objet d'acheminement donné sélectionné (OA) et mettre à jour le gain dudit objet d'acheminement donné sélectionné en fonction de la taxation de la communication après l'établissement de celle-ci, un troisième élément de signalisation définissant ledit chemin aval étant inclus dans un message d'appel étant transmis vers un noeud suivant ledit noeud de commutation le long dudit chemin aval si ledit chemin aval défini par ledit paramètre de chemin aval dudit objet d'acheminement donné sélectionné est décrit sous une forme arborescente non triviale.

2. Procédé conforme à la revendication 1, caractérisé en ce que lesdits objets d'acheminement (OA^{P}ₖ, OA^{S}ᵢ) de la liste (LOA^{P}ₖ, LOA^{S}ᵢ) sont obtenus à partir des étapes suivantes :
- à la réception de chaque message d'appel ou tous les N messages d'appel, N étant un entier prédéterminé, création d'objets nouveaux en nombre égal ou inférieur au nombre de paramètres dans un objet, chacun desdits objets nouveaux étant identique à un objet compatible audit message d'appel reçu et ayant un gain maximal à l'exception d'un paramètre respectif dont la profondeur de la description arborescente est incrémentée d'un niveau,
- calcul de gains respectifs des objets nouveaux en leur associant logiquement à chacun d'eux des communications qui lui sont compatibles, et
- suppression dans la liste, de chaque objet ayant un gain de segmentation égal à la différence, par communication, de son gain et du gain de l'objet ayant donné lieu à sa création multipliée par le nombre de communications associées logiquement audit objet, qui est trop faible en dépendance d'une limitation en nombre d'objets d'acheminement de ladite liste.

3. Procédé conforme à la revendication 1 ou 2, caractérisé en ce que l'étape de sélection comprend préalablement
une sous-étape de classement des objets compatibles par famille de profondeur d'arborescence homogène pour leurs cinq paramètres, et
une sous-étape de correction de gain par communication pour chaque objet d'une famille donnée par déduction d'un gain de segmentation par communication relativement à une famille de référence, afin que ladite étape de sélection consiste à sélectionner un objet d'acheminement ayant un gain corrigé maximal.

4. Procédé conforme à l'une quelconque des revendications 1 à 3, caractérisé en ce que les coûts comptabilisés en temps réel dépendant d'informations de taxation modifient le gain d'un objet d'acheminement dans les deux cas suivants :
a) lors d'un débordement d'un chemin aval défini par un paramètre de chemin aval d'un premier objet compatible sélectionné ayant un gain maximal, lequel débordement oriente l'appel vers un chemin aval défini par un paramètre de chemin aval d'un second objet d'acheminement compatible ayant un gain immédiatement inférieur audit gain maximal, un coût induit par ce débordement étant égal à une différence entre un premier gain attendu, égal au gain par appel dudit premier objet si l'appel avait été acheminé selon ledit chemin aval défini par le paramètre de chemin aval dudit premier objet, et un second gain, égal au gain de l'appel sur le chemin aval défini par ledit paramètre de chemin aval dudit second objet; et
b) lors d'un refus définitif par ledit noeud d'une communication à établir, un coût induit par ce refus étant égal à un gain attendu par communication pour un objet ayant donné lieu audit refus.

5. Procédé conforme à l'une quelconque des revendications 1 à 4, caractérisé en ce que les recettes et les coûts comptabilisés en temps réel sont calculés pour chacun desdits objets d'acheminement relativement aux informations de taxation par incrémentation d'une valeur de gain et décrémentation de ladite valeur de gain à l'expiration d'une durée (T) déterminée en dépendance d'évènements dans ledit réseau de télécommunications.

6. Procédé conforme aux revendications 1 à 4, caractérisé en ce que les recettes et les coûts comptabilisés en temps réel sont calculés pour chacun desdits objets d'acheminement relativement aux informations de taxation par incrémentation d'une valeur de gain et décrémentation de ladite valeur de gain à l'expiration d'une durée (T) constante prédéterminée.

7. Procédé conforme à l'une quelconque des revendications 1 à 6, caractérisé en ce qu'une description arborescente d'au moins l'un desdits cinq paramètres de certains desdits objets d'acheminement dans ledit noeud de commutation a une profondeur volontairement limitée.

## Patentansprüche

1. Verfahren zur Wegeführung einer zu erstellenden Kommunikation in einen Umschaltknoten eines Telekommunikationsnetzes während derer Verbindungsaufbaus, dadurch gekennzeichnet, daß eine Liste von Objekten zur Wegeführung (LOA^{P}ₖ, LOA^{S}ᵢ) mit dem Knoten (NCₚ, NCₛ) verbunden wird, wobei jedes der Objekte zur Wegeführung fünf Parameter einschließt, und zwar einen Parameter für den Weg aufwärts (CM), einen Ursprungsparameter (O), einen Zielparameter (D), einen Bedienungsparameter (S) und einen Parameter für den Weg abwärts (CV), wobei jeder der fünf Parameter in einer verzweigten Form beschrieben ist, die für einige von ihnen einfach sein kann, und daß
während des Verbindungsaufbaus eine Anrufsmeldung mit zwei ersten Signalelementen, die den Ursprung und das Ziel des Anrufs definieren, und, wenn eine verzweigte Beschreibung des Parameters für den Weg aufwärts nicht einfach ist, mit einem zweiten Signalelement übertragen wird, welches einen Weg aufwärts definiert, dem von der Meldung durch das Netz von dem Ursprung bis zum Umschaltknoten gefolgt wird, wobei das Verfahren folgende Stufen enthält:
- Suche nach Objekten zur Wegeführung der Liste (OA^{P}ₖ, OA^{S}ᵢ) mit Parametern für Ursprung (O), Ziel (D), und Weg aufwärts (CM), die mit den Signalelementen der Anrufsmeldung dadurch kompatibel sind, daß ihre verzweigten Beschreibungen Tiefen aufweisen, die jeweils unter denjenigen der Signalelemente in kompatiblen Objekten liegen,
- Auswählen eines gegebenen Objektes zur Wegeführung unter den kompatiblen Objekten, dessen Maximalgewinn gleich der Maximaldifferenz zwischen den Einnahmen und den in Echtzeit verbuchten Kosten in Abhängigkeit von den Informationen über Gebührenerfassung in bezug auf diverse Kommunikationen ist, die mit dem gegebenen Objekt zur Wegeführung logisch verbunden sind, und
- logisches verbinden der zu erstellenden Kommunikation mit dem gegebenen, ausgewählten Objekt zur Wegeführung, damit die Kommunikation gemäß einem vom Parameter für den Weg abwärts (CV) des gegebenen ausgewählten Objekts zur Wegeführung (OA) definierten Weg abwärts gelenkt wird, und damit der Gewinn des gegebenen Objekts zur Wegeführung auf den neuesten Stand gebracht wird, das in Abhängigkeit von der Gebührenerfassung der Kommunikation nach deren Erstellung ausgewählt wird, wobei ein drittes Signalelement zur Definition des Wegs abwärts in einer Anrufsmeldung enthalten ist, die zu einem Knoten gemäß dem Umschaltknoten längs dem Weg abwärts übertragen wird, wenn der Weg abwärts, der durch den Parameter für den Weg abwärts des gegebenen ausgewählten Objekts zur Wegeführung in einer verzweigten nicht einfachen Form beschrieben ist.

2. Verfahren nach Anspruch 1, dadurch gekennzeichnet, daß die Objekte zur Wegeführung (OA^{P}ₖ, OA^{S}ᵢ) der Liste (LOA^{P}ₖ, LOA^{S}ᵢ) ausgehend von den folgenden Stufen erreicht werden:
- Beim Empfang jeder Anrufsmeldung oder jede N-te Anrufsmeldung, wobei N eine vorgegebene Ganzzahl ist, Schaffung von neuen Objekten in einer Anzahl gleich der oder kleiner als die Anzahl der Parameter in einem Objekt, wobei jedes der neuen Objekte einem Objekt identisch ist, das mit der empfangenen Anrufsmeldung kompatibel ist, und einen Maximalgewinn aufweist mit Ausnahme eines jeweiligen Parameters, dessen Tiefe der verzweigten Beschreibung um eine Ebene inkrementiert ist.
- Berechnung der jeweiligen Gewinne der neuen Objekte, wobei jedes mit Kommunikationen logisch verbunden wird, die mit ihm kompatibel sind, und
- Streichung jedes Objekts aus der Liste, das pro Kommunikation einen Segmentierungsgewinn gleich der Differenz zwischen seinem Gewinn und dem Gewinn des Objekts, das seine Erstellung verursacht hat, multipliziert mit der Anzahl der mit dem Objekt logisch verbundenen Kommunikationen, welches in Abhängigkeit von einer Einschränkung der Anzahl der Objekte zur Wegeführung der Liste zu klein ist.

3. Verfahren nach Anspruch 1 oder 2, dadurch gekennzeichnet, daß die Stufe zum Auswählen vorher beinhaltet
eine Unterstufe für die Klassifizierung der kompatiblen Objekte in Familien homogener Verzweigungstiefe bezüglich ihrer fünf Parameter, und
eine Unterstufe für die Gewinnkorrektur pro Kommunikation für jedes Objekt einer gegebenen Familie durch Abziehen eines Segmentierungsgewinns pro Kommunikation bezüglich einer Bezugsfamilie, damit die Stufe zum Auswählen darin besteht, ein Objekt zur Wegeführung mit korrigiertem Maximalgewinn auszuwählen.

4. Verfahren nach einem der Ansprüche 1 bis 3, dadurch gekennzeichnet, daß die von Informationen über die Gebührenerfassung abhängigen, in Echtzeit verbuchten Kosten den Gewinn eines Objekts zur Wegeführung in beiden folgenden Fällen verändern:
a) wenn eine Überschreitung des Wegs abwärts, der durch einen Parameter für den Weg abwärts eines ersten kompatiblen ausgewählten, einen Maximalgewinn aufweisenden Objekts definiert ist, den Anruf in Richtung eines Weges abwärts lenkt, der durch einen Parameter für den Weg abwärts eines zweiten kompatiblen Objekts zur Wegeführung definiert wurde, das einen Gewinn aufweist, der unmittelbar kleiner als der Maximalgewinn ist, wobei die durch diese Überschreitung entstandenen Kosten gleich einer Differenz sind zwischen einem ersten erwarteten Gewinn, der gleich dem Gewinn pro Anruf des ersten Objekts ist, wenn der Anruf gemäß dem Weg abwärts gelenkt worden wäre, der durch den Parameter für den Weg abwärts des ersten Objekts definiert ist, und einem zweiten Gewinn, der gleich dem Gewinn des Anrufs auf dem Weg abwärts ist, der durch den Parameter für den Weg abwärts des zweiten Objekts definiert ist; und
b) bei endgültiger Ablehnung durch den Knoten einer zu erstellenden Kommunikation, wobei die Kosten, die durch diese Ablehnung entstehen, gleich einem erwarteten Gewinn pro Kommunikation für ein Objekt sind, das die Ablehnung verursacht hat.

5. Verfahren nach einem der Ansprüche 1 bis 4, dadurch gekennzeichnet, daß die Einnahmen und die in Echtzeit verbuchten Kosten für jedes der Objekte zur Wegeführung in bezug auf die Informationen über die Gebührenerfassung durch Inkrementierung eines Gewinnwertes und Dekrementierung des Gewinnwertes beim Ablauf einer Dauer (T) berechnet werden, die von den Ereignissen in dem Telekommunikationsnetz abhängig ist.

6. Verfahren nach den Ansprüchen 1 bis 4, dadurch gekennzeichnet, daß die Einnahmen und die in Echtzeit verbuchten Kosten für jedes der Objekte zur Wegeführung in bezug auf die Informationen über die Gebührenerfassung durch Inkrementierung eines Gewinnwertes und Dekrementierung des Gewinnwertes beim Ablauf einer vorgegebenen konstanten Dauer (T) berechnet werden.

7. Verfahren nach einem der Ansprüche 1 bis 6, dadurch gekennzeichnet, daß eine verzweigte Beschreibung wenigstens eines der fünf Parameter von bestimmten Objekten zur Wegeführung in den Umschaltknoten eine freiwillig begrenzte Tiefe hat.

## Claims

1. A method for routing a communication to be set up during a call procedure thereof at a switching node of a telecommunication network, characterized in that
a list of routing objects (LOA^{P}ₖ, LOA^{S}ᵢ) being associated to said switching node (NC_{P}, NC_{S}), each of said routing objects including five parameters which are an upstream path parameter (UP), an origin parameter (O), a destination parameter (D), a service parameter (S) and a downstream path parameter (CV), each of said five parameters being described in a tree-structural form which can be trivial for some of parameters, and
during said call procedure a call message including two first signalling elements defining origin and destination of the communication is transmitted and, in the case where a tree-structural description of said upstream path parameter is not trivial, a second signalling element defining an upstream path followed by the message in the network from the origin up to said switching node,
and the method comprises the following steps :
- searching for routing objects of said list (OA^{P}ₖ, OA^{S}ᵢ) including origin (O), destination (D) and upstream path (CM) parameters compatible with the signalling elements of the call message in that their tree-structural descriptions have depths less than those of said signalling elements, respectively, into compatible objects,
- selecting from among said compatible objects a given routing object having a maximum gain equal to a maximum difference between incomes and costs accounted in real-time depending on charging information relative to various communications associated logically with said given routing object, and
- associating logically said communication to be set up with said selected given routing object, so as to route the communication along a downstream path defined by the downstream path parameter (CV) of said selected given routing object (OA) and updating the gain of said selected given routing object as a function of charge information of the communication after setting up of the latter, a third signalling element defining said downstream path being included in a call message to be transmitted to a node following said switching node along the downstream path if said downstream path defined by said downstream path parameter of said selected given routing object is described in non-trivial tree-structural form.

2. The method according to claim 1, characterized in that said routing objects (OA^{P}ₖ, OA^{S}ᵢ) of the list (LOA^{P}ₖ, LOA^{S}ᵢ) are obtained from the following steps :
- on receipt of each call message or a call message every N call messages, N being a predetermined integer, creating new objects in a number equal to or less than the number of parameters in a object, each of said new objects being identical to an object compatible to said received call message and having a maximum gain with the exception of a respective parameter whose tree-structural description depth is incremented by one level,
- computating respective gains of the new objects by associating them logically to each of these new objects communications which are compatible with the latter, and
- deleting in the list each object having a segmentation gain equal to the difference, per communication, between its gain and the gain of the object having given rise to its creation, multiplied by a number of communications associated logically to said object, which is too low as a function of a limitation in number of routing objects of said list.

3. The method according to claim 1 or 2, characterized in that the selecting step beforehand comprises :
a sub-step for classifying compatible objects into families having homogeneous tree-structure depths for their five parameters, and
a sub-step for correcting gain per communication for each object of a given family by deducting a segmentation gain per communication relative to a reference family, so as said selecting step consists in selecting a routing object with a corrected gain which is maximum.

4. The method according to any one of claims 1 to 3, characterized in that the costs accounted in real-time depending on charging information modify the gain of a routing object in the two following cases :
a) responsive to an overflow from a downstream path defined by a downstream path parameter of a first selected compatible object having a maximum gain, which overflow guide the communication toward a downstream path defined by a downstream path parameter of a second compatible routing object having a gain immediately lower than said maximum gain, a cost resulting from this overflow being equal to a difference between a first expected gain equal to a first gain per communication of said first routing object if the communication had been routed along the downstream path defined by the downstream path parameter of said first object, and a second gain equal to the gain per communication along the downstream path defined by said downstream path parameter of said second object ; and
b) responsive to a definitive refusal of the communication to be set up by said node, a cost resulting from this refusal being equal to an expected gain per communication by an object giving rise to the refusal.

5. The method according to any one of claims 1 to 4, characterized in that the incomes and costs accounted in real-time depending on charging information are computed for each of said routing objects by incrementing a gain value and decrementing said gain value on expiry of a determined duration (T) as a function of events in said telecommunication network.

6. The method according to claims 1 to 4, characterized in that the incomes and costs accounted in real-time depending on charging information are computed for each of said routing objects by incrementing a gain value and decrementing said gain value on expiry of a predetermined constant duration (T).

7. The method according to any one of claims 1 to 6, characterized in that a tree-structural description of at least one of said five parameters of certain said routing objects in said switching node deliberately has a limited depth.
